# EUROPEAN PATENT APPLICATION

(11) **EP 3 785 995 A1**
(43) Date of publication of application: **03.03.2021**
(21) Application number: 19194445.3
(22) Date of filing: 29.08.2019
(51) Int. Cl.: B60R 1/00

(54) **SYSTEM AND METHOD FOR PROVIDING A DRIVING MODE DEPENDENT SIDE MIRROR FUNCTIONALITY WITHIN A VEHICLE**

(71) Applicant: Visteon Global Technologies, Inc., Van Buren Township, MI 48111-5711 (US)
(72) Inventor: VITORIANO, Pedro Miguel Agulhas, 2951-503 Palmela (PT)
(74) Representative: MERH-IP Matias Erny Reichl Hoffmann Patentanwälte PartG mbB

(57) **Abstract**

A system and method for providing a vehicle with a driving mode dependent side mirror functionality. The system and method includes a) determining whether the vehicle is operated in a first driving mode or in a second driving mode, b) adapting the field of view of a camera unit to capture image data for providing a side mirror functionality and a display based on the captured image data, when it is determined that the vehicle is operated in a first driving mode, and c) adapting the field of view of the camera unit to capture image data for assisting an advanced driver assistance functionality of the vehicle and reconfiguring the display based on data from an information source, when it is determined that the vehicle is operated in a second driving mode. Functionality of an advanced driver assistance system may be tailored in relation to the driving mode.

## Description

### TECHNICAL FIELD

One or more embodiments described herein relate to a system and method for providing a driving mode dependent side mirror functionality within a vehicle. Furthermore, one or more embodiments described herein relate to a vehicle comprising a camera unit and a reconfigurable display.

### BACKGROUND

A vehicle, notably a road vehicle such as a car, a bus, a truck or a motorcycle, comprises side mirrors which enable a driver of the vehicle to see the environment of the vehicle behind the rear of the vehicle. In a conventional set-up, the side mirrors of the vehicle extend laterally outward from opposite sides of the vehicle. The maximum width of the vehicle may be measured from a first side mirror, such as a left side mirror, to a second side mirror, such as a right side mirror.

A vehicle may comprise an advanced driver assistance system (ADAS), which is configured to at least partially take over the driving task of the driver of the vehicle. For example, the vehicle, when the ADAS is activated, may operate in an autonomous driving mode or a semi-autonomous driving mode. When the ADAS is deactivated, the vehicle may operate in a manual driving mode. In the manual driving mode, all of the driving tasks may be allocated to the driver of the vehicle. In the vehicle, the ADAS may use sensors of the vehicle, such as cameras, radar sensors, lidar sensors, and/or ultrasonic sensors to sense an environment around the vehicle.

A vehicle may comprise one or more displays. The one or more displays may be located in a cabin of the vehicle. For example, the one or more displays may be embedded into a dashboard of the vehicle.

### BRIEF SUMMARY OF THE INVENTION

One or more embodiments describe a system for providing a vehicle with a driving mode dependent side mirror functionality. The system comprises a control unit configured to determine whether the vehicle is operated in a first driving mode or in a second driving mode. The system further comprises a camera unit coupled to the control unit and configured to capture image data within an adaptable field of view. And the system comprises a display coupled to the control unit.

According to an aspect, the control unit is configured to a) adapt the field of view of the camera unit to capture image data for providing a side mirror functionality and the display based on the captured image data, when it is determined that the vehicle is operated in the first driving mode.

According to an aspect, the control unit is further configured to b) adapt the field of view of the camera unit to capture image data for use by an advanced driver assistance functionality of the vehicle and to reconfigure the display based on data from an information source, when it is determined that the vehicle is operated in the second driving mode.

According to an aspect, the camera unit may be provided at a side of the vehicle and the display may be provided in the vehicle cabin within the field of view of the driver of the vehicle.

According to an aspect, the camera unit may comprise a camera configured to capture the image data and a drive unit configured to change the focal length and/or the orientation of the camera horizontally and/or vertically to adapt the field of view of the camera unit.

According to an aspect, the first driving mode may correspond to a mode in which the driver of the vehicle may be required to perform a driving task or to supervise an automated guidance of the vehicle, and the second driving mode may correspond to a mode in which the driver of the vehicle may not be required to perform a driving task or to supervise an automated guidance of the vehicle.

According to an aspect, the first driving mode may include one of automation levels 0 to 3 as defined by the Society of Automotive Engineers, (SAE), under J3016, and the second driving mode may include one of automation levels 4 or higher as defined by the Society of Automotive Engineers, (SAE), under J3016.

According to an aspect, the vehicle may comprise a user interface configured to receive an input from the driver of the vehicle to select a driving mode or an automation level, and the control unit may be configured to determine whether the vehicle is operated in the first driving mode or in the second driving mode based on the received input.

According to an aspect, the control unit may be configured to, based on the received input, to adapt the field of view of the camera unit, to adapt the display based on the captured image data and to reconfigure the display based on the data from the information source.

According to an aspect, the vehicle may comprise one or more sensors selected from the group consisting of a LIDAR sensor, a short-range RADAR sensor, a long-range RADAR sensor, a video camera, an infrared sensor and an ultrasonic sensor, and the advanced driver assistance functionality may be based on sensor data obtained by the one or more sensors.

According to an aspect, the data from the information source may comprise at least one of personal information data, general information data, infotainment data or sensor data.

According to an aspect, the system may comprise a first and a second camera unit, coupled to the control unit and a first and a second display, coupled to the control unit, wherein the first camera unit may be provided at a first side of the vehicle and the second camera unit may be provided at the side opposite to the first side of the vehicle and the first display and the second display may be provided within the vehicle cabin in the field of view of the driver of the vehicle.

The control unit may then be configured to a) independently adapt the field of view of the first camera unit to capture first image data and of the second camera unit to capture second image data for providing the side mirror functionality and the first display based on the first image data and the second display based on the second image data, when it is determined that the vehicle is operated in the first driving mode.

And the control unit may be configured to b) independently adapt the field of view of the first camera unit to capture first image data and/or of the second camera unit to capture second image data for assisting the advanced driver assistance functionality of the vehicle and to reconfigure the first display and/or the second display based on the data from the information source, when it is determined that the vehicle is operated in the second driving mode.

On or more embodiments further describe a vehicle. The vehicle comprises a system for providing the vehicle with a driving mode dependent side mirror functionality. And the vehicle is configured to be operated in a first driving mode or in a second driving mode.

One or more embodiments further describe a method for providing a vehicle with a driving mode dependent side mirror functionality.

According to an aspect, the method comprises the step of a) determining, by a control unit, whether the vehicle is operated in a first driving mode or in a second driving mode.

According to an aspect, the method further comprises the step of b) upon determining that the vehicle is operated in the first driving mode, adapting, by the control unit, the field of view of a camera unit to capture image data for providing a side mirror functionality and the display based on the captured image data.

According to an aspect, the method further comprises the step of c) upon determining that the vehicle is operated in the second driving mode, adapting, by the control unit, the field of view of the camera unit to capture image data for use by an advanced driver assistance functionality of the vehicle and reconfiguring, by the control unit, the display based on data from an information source.

According to an aspect, the first driving mode may correspond to a mode in which the driver of the vehicle may be required to perform a driving task or to supervise an automated guidance of the vehicle, and the second driving mode may correspond to a mode in which the driver of the vehicle may not be required to perform a driving task or to supervise an automated guidance of the vehicle; or the first driving mode may correspond to one of automation levels 0 to 3 as defined by the Society of Automotive Engineers, (SAE), under J3016, and the second driving mode may correspond to one of automation level 4 or higher as defined by the Society of Automotive Engineers, (SAE), under J3016.

According to an aspect, the method may further comprise the step of receiving, via a user interface, an input from the driver of the vehicle to select a driving mode or an automation level, and method steps a) to c) may be based on the received input.

According to an aspect, step b) may comprise upon determining that the vehicle is operated in the first driving mode, adapting, by the control unit, independently the field of view of a first camera unit to capture first image data and the field of view of a second camera unit to capture second image data for providing the side mirror functionality and the first display based on the first image data and the second display based on the second image data; and step c) may comprise upon determining that the vehicle is operated in the second driving mode, adapting, by the control unit, independently the field of view of the first camera unit to capture first image data and/or the field of view of the second camera unit to capture second image data for assisting the advanced driver assistance functionality of the vehicle and reconfiguring, by the control unit, the first display and/or the second display based on the data from the information source.

### BRIEF DESCRIPTION OF THE DRAWINGS

Fig. 1 illustrates an embodiment of a vehicle comprising a system for providing the vehicle with a driving mode dependent side mirror functionality.
Fig. 2 illustrates an embodiment of an adaption of the field of view of a first and second camera unit and a first and second display.
Fig. 3 illustrates an embodiment of an adaption of the field of view of a first and second camera unit and reconfiguration of a first and second display.
Fig. 4 illustrates an embodiment of an adaption of the field of view of a first and second camera unit and a first display and reconfiguration of a second display.
Fig. 5 shows one side of a vehicle including a wheel and illustrates an embodiment of an adaption of the field of view of a camera unit and reconfiguration of a display.
Fig. 6 illustrates a flow chart of an embodiment of a method for providing the vehicle with a driving mode dependent side mirror functionality.

### DETAILED DESCRIPTION OF THE INVENTION

As outlined above, described herein are a system and method for providing a vehicle with a driving mode dependent side mirror functionality. The vehicle may be enabled with an advanced driver assistance functionality, e.g. may be enabled with an advanced driver assistance system (ADAS). The driving mode dependent side mirror functionality may be realized by a camera unit and a display which is reconfigurable in dependence on a driving mode of the vehicle. In a manual driving mode, for example, the reconfigurable display may provide the driver of a vehicle with a side mirror functionality based on the image data captured by the camera unit In an autonomous driving mode, while the image data captured by the camera unit may be used by the advanced driver assistance functionality for guiding and controlling the vehicle and its environment, the display may be reconfigured based on data from an information source to provide additional tailored functionality for the driver (user) of the vehicle to reduce the need for user interaction and may allow for a full reconfigurable instrument functionality of the advanced driver assistance system.

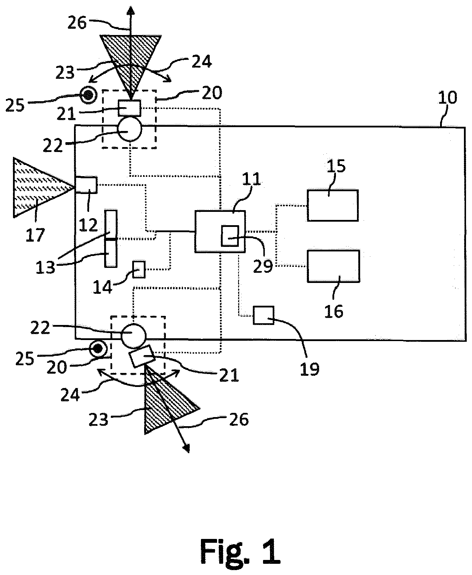

Referringto the embodiment of Figure 1, a vehicle comprising a system for providing the vehicle with a driving mode dependent side mirror functionality is illustrated. The vehicle 10 may be a two-track vehicle. A system for providing the vehicle 10 with a driving mode dependent side mirror functionality comprises a camera unit 20. In the embodiment of Figure 1 a first camera unit 20 may be provided at a first side of the vehicle 10, for example the left side, and a second camera unit 20 may be provided at the side opposite to the first side, i.e. a second side, for example the right side of the vehicle 10.

While in the embodiment of Figure 1 a first and a second camera unit 20 are illustrated, also the provision of three or more camera units 20 distributed along the first and the second side of the vehicle 10 may be conceivable.

A camera unit 20 is configured to capture image data. The image data may be captured with regard to the environment of the vehicle 10, in particular, the environment of the side of the vehicle 10 where the camera unit 20 is provided. The image data captured by the camera unit 20 may comprise a sequence of image frames, for example, at a frame rate of 20 images/second or more, or of 50 images/second or more.

In an embodiment, a camera unit 20 may comprise a camera 21 configured to capture the image data. The camera 21 may exhibit a field of view 23 for capturing the image data. The field of view 23 may be adaptable. The field of view 23 may span a defined range of azimuth angles and/or a defined range of inclination or elevation angles. Examples of angular ranges of azimuth and/or inclination angles lie between 30° and 90°.

In an embodiment, a camera unit 21 may further comprise a drive unit 22 configured to change the focal length and/orthe orientation 26 of the camera horizontally 24 and/or vertically 25 (with respect to the vehicle) to adapt the field of view 23 of the camera 21.

The drive unit 22 may be operated using one or more electrical motors. In particular, the drive unit 22 may be configured to rotate the field of view 23 of the camera 21 around a vertical axis (notably the z-axis or the yaw axis of the vehicle 10), in order to change the azimuth angle 24 of the orientation 26 of the field of view 23. Alternatively, or additionally, the drive unit 22 may be configured to rotate the field of view 23 around a horizontal axis (notably the x-axis or the roll axis of the vehicle 10), in order to change the inclination or elevation angle 25 of the orientation 26 of the field of view 23 of the camera 21.

A system for providing the vehicle 10 with a driving mode dependent side mirror functionality further comprises a display 13. A display 13 may be realized as liquid crystal display (LCD) or (organic) light emitting diode display ((O)LED).

Referring to the embodiment of Figure 1, a first display 13 and a second display 13 are illustrated. The first and the second display 13 may be provided within the vehicle cabin (or head unit) in the field of view of a driver of the vehicle 10. The first and the second display 13 may be provided as such that the driver may view the contents of the displays 13 while driving without the need for turning the head. In this, the driver can be provided with a respective functionality via the first and second display 13.

While in the embodiment of Figure 1 a first and a second display 13 are illustrated, also the provision of one display 13 provided within the vehicle cabin may be conceivable if one camera unit 20 is provided. If one display 13 and two camera units 20 are provided, the contents of the first and the second display 13 may also be displayed on one display 13 simultaneously or subsequently.

A system for providing a vehicle 10 with a driving mode dependent side mirror functionality further comprises a control unit 11. The control unit 11 may be an electronic control unit (ECU). The ECU may also be part of an advanced driver assistance system (ADAS) enabled in a vehicle 10.

In the system for providing the vehicle 10 with a driving mode dependent side mirror functionality, the camera unit 20 and the display 13 are coupled to the control unit 11. Referring to the example of Figure 1, the first camera unit 20, the second camera unit 20, the first display 13 and the second display 13 are coupled to the control unit 11 as illustrated by the respective lines in Figure 1. In this, the control unit 11 is able to operate and control the camera units 20 and the displays 13.

The control unit 11 is configured to determine whether the vehicle 10 is operated in a first driving mode or in a second driving mode.

In an embodiment, the first driving mode may correspond to a mode in which the driver of the vehicle 10 may be required to perform a driving task or to supervise an automated guidance of the vehicle 10, and the second driving mode may correspond to a mode in which the driver may not be required to perform a driving task or to supervise an automated guidance of the vehicle 10.

Referring again to the embodiment of Figure 1, a driving task or automated guidance of the vehicle 10 may be accomplished, for example, by operating the actuator/break 15 of the vehicle 10 to control the speed of the vehicle 10 or by operating, for example, a steering mechanism 16, for example a steering wheel, to guide the vehicle 10, e.g. in a particular driving direction. The control unit 11 of the vehicle 10 may be configured to at least partially take over the guidance of the vehicle 10. Guidance of the vehicle 10 by the control unit 11 may be based on sensor data 17 of one or more sensors 12 in order to provide advanced driver assistance functionality, i.e. an advanced driver assistance system (ADAS) within the vehicle 10.

The degree of assistance provided to the driver of a vehicle 10 may vary. The different degrees of assistance may be defined by the automation levels 0 up to 5, according to the Society of Automotive Engineers (SAE), under J3016, which is hereby incorporated by reference including any reviews, updates or future versions, in the following also referred to as "automation levels" or "SAE levels".

In accordance with SAE, under J3016, level 0 (which may be referred to as "No Driving Automation") corresponds to a fully manual driving mode where the driver performs all driving tasks in the vehicle 10.

In accordance with SAE, under J3016, level 1 (which may be referred to as "Driver Assistance") provides driver assistance, wherein the vehicle 10 is still controlled by the driver, but wherein one or more driving assist features are provided to the driver.

In accordance with SAE, under J3016, level 2 (which may be referred to as "Partial Driving Automation") provides partial automation of the vehicle 10, e.g. with regards to acceleration and/or steering, however the driver remains engaged with the driving task and must monitor the environment of the vehicle 10 at all times.

In accordance with SAE, under J3016, level 3 (which may be referred to as "Conditional Driving Automation") provides a conditional automation of the vehicle 10, such that the vehicle 10 may drive autonomously during some driving situations. However, the driver must be ready to take control of the vehicle 10 at all times, given a certain notice or handover period (e.g. a few seconds).

In accordance with SAE, under J3016, level 4 (which may be referred to as "High Driving Automation") provides high automation, where the vehicle 10 is capable of performing all driving functions under certain conditions. When the certain conditions are met, the vehicle 10 is capable of performing all driving functions. The driver is not required to take over control of the vehicle 10.

In accordance with SAE, under J3016, level 5 (which may be referred to as "Full Driving Automation") provides full automation, wherein the vehicle 10 is capable of performing all driving functions under all conditions. The driver is not required to take over control of the vehicle.

A vehicle 10 which is operated according to SAE levels 0 to 3, as detailed above, typically requires a side mirror functionality, in order to enable the driver of the vehicle 10 to perform a driving task or to supervise an automated guidance of the vehicle 10. On the other hand, a side mirror functionality is typically not required for a vehicle 10 which is operated according to SAE levels 4 or 5 as detailed above. In such cases, the one or more camera units 20 of the vehicle 10 may be used as auxiliary sensors to enhance the ADAS functionalities of the vehicle 10.

Referring to the above defined SAE levels, in an embodiment, the first driving mode may include one of automation levels 0 to 3, and the second driving mode may include one of automation levels 4 or higher.

In a system for providing a vehicle 10 with a driving mode dependent configurable side mirror functionality, the control unit 11 is configured to adapt the field of view 23 of the camera unit 20 to capture image data for providing the side mirror functionality and the display 13 based on the captured image data, when it is determined that the vehicle is operated in the first driving mode. The control unit 11 is further configured to adapt the field of view 23 of the camera unit 20 to capture image data for use by the advanced driver assistance functionality of the vehicle 10 and to reconfigure the display 13 based on data from an information source, when it is determined that the vehicle is operated in the second driving mode.

In an embodiment, the data from the information source may comprise at least one of personal information data, general information data, infotainment data or sensor data.

The type and number of the information source is not limited. Referring again to the embodiment of Figure 1, depending on the type of data, the information source may be a storage unit 19. In a storage unit 19, for example, infotainment data such as videos, audio books or music may be stored for offline use by a driver of the vehicle 10. Also, general data such as road maps or vehicle component data may be stored in the storage unit 19. Sensor data 17 from one or more sensors 12 may also be buffered in the storage unit 19 for subsequent use by the advanced driver assistance functionality of the vehicle 10 or for reasons of generating statistics on the vehicle performance. In the embodiment of Figure 1, it is illustrated by way of lines that the storage unit 19 is connected to the control unit 11. This connection may, however, be realized as a wired, wireless and/or Bluetooth connection.

Alternatively, or additionally, the information source may be an internet connection 29 to access, for example, one or more servers. Personal data such as, for example, emails, personal calendars, notes, messenger applications, personal accounts, may be accessed via this type of information source. Also, general information data such as, for example, news or road mapping applications concerning route planning involving the current position may be accessed.

Referring again to the embodiment of Figure 1, the vehicle 10 may comprise a user interface 14 configured to receive an input from the driver of the vehicle 10 to select a driving mode or an automation level (in accordance with SAE levels as detailed above) and the control unit 11 may be configured to determine whether the vehicle 10 is operated in the first driving mode or in the second driving mode based on the received input.

In particular, the driver may be enabled to select the first or the second driving mode directly, or to select one of automation levels 0 to 4 or higher. If the driver, for example, selects one of automation levels 0 to 3, the control unit 11 may be configured to determine that the vehicle 10 is operated in the first driving mode. If the driver, for example, selects one of automation levels 4 or higher, the control unit 11 may be configured to determine that the vehicle 10 is operated in the second driving mode.

In an embodiment, the control unit 11 may further be configured to, based on the received input from the driver of the vehicle 10, to adapt the field of view 23 of a camera unit 20, to adapt a display 13 based on the captured image data and to reconfigure a display 13 based on the data from the information source 19, 29.

While the user interface 14 may enable the driver of the vehicle 10 to select a driving mode or an automation level (in accordance with SAE levels as detailed above), the user interface 14 may further be configured to enable a driver to personalize the data from the information source 19, 29 to be displayed upon reconfiguration of the display 13 by the control unit 11, when it is determined that the vehicle 10 is operated in the second driving mode.

If the driver, for example, selects an automation level via the user interface 14, the driver may further be enabled to refine the personalization of the data from the information source 19, 29 depending on the selected automation level. For example, the data from the information source 19, 29 to be displayed upon reconfiguration of the display 13 by the control unit 11, when it is determined that the vehicle 10 is operated in the second driving mode, may be individually selected for each automation level of 4 or higher.

The personalization of the data from the information source 19, 29 as detailed above may be stored in the storage unit 19 of the vehicle 10 or in the control unit 11 as a user profile. The storage unit 19 or the control unit 11 may further be configured to store one or more user profiles if the vehicle 10 is operated by one or more drivers.

The user interface 14 may further be configured to receive the input from a driver to select a driving mode or an automation level (in accordance with SAE levels as detailed above) one or more times. For example, the input by the driver may be facilitated upon starting the operation of the vehicle 10, but additionally also during operation of the vehicle 10, i.e. the driving mode or automation level may be changed one or more times. The control unit 11 may then be configured to adapt the field of view 23 of a camera unit 20 and to adapt or reconfigure a display 13 accordingly when the driving mode is changed.

Referring again to Figure 1, in an embodiment, the vehicle 10 may comprise (additionally) one or more sensors 12. The sensors 12 may be configured to capture sensor data 17 with regard to the environment of the vehicle 10. The one or more sensors 12 may be selected from the group consisting of a LIDAR sensor, a short-range RADAR sensor, a long-range RADAR sensor, a video camera, an infrared sensor and an ultrasonic sensor. A sensor 12 typically exhibits a defined sensing range depending on the type of sensor 12 used. The sensing range defines the range and/or the area of the environment of the vehicle 10 for which sensor data 17 may be captured.

In an embodiment, the advanced driver assistance functionality of the vehicle 10 may be based on the sensor data 17 obtained by the one or more sensors 12.

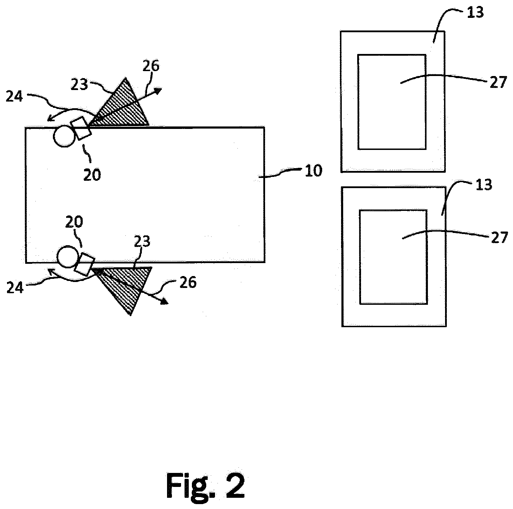

Referring to the embodiment of Figure 2, an adaption of the field of view of a first and second camera unit and a first and second display is illustrated.

In the embodiment of Figure 2, the driving mode may be the first driving mode. In the embodiment of Figure 2, the control unit 11 may be configured to adapt the field of view 23 of the first and the second camera unit 20 of the vehicle 10 to be oriented towards the rear of the vehicle 10. The field of view 23 of the camera units 20 may be as such that it corresponds to the typical field of view of a side mirror of a vehicle 10.

In the embodiment of Figure 2, the control unit 11 may further be configured to adapt the first and second display 13 based on the first and second image data 27 captured by the camera units 20. For example, the control unit 11 may render the image data 27. The displays 13 may then provide the typical look of a driver in side mirrors.

Hence, the one or more side mirrors of a vehicle 10 may be replaced by one or more camera units 20, respectively, wherein the one or more camera units 20 are configured to provide image data of the rear environment of the vehicle 10. By doing this, the width of the vehicle 10 may be reduced and the aerodynamic properties of the vehicle 10 may be improved.

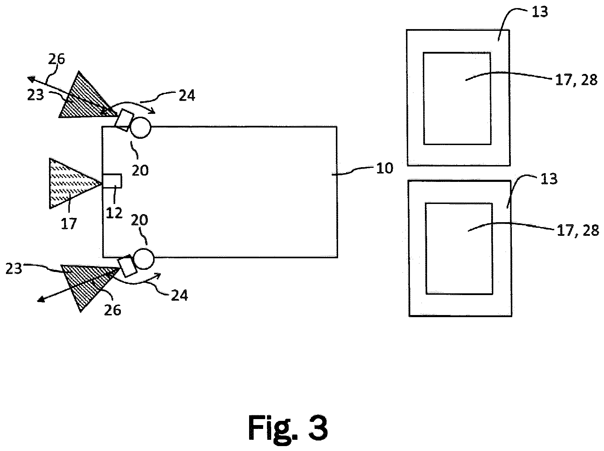

Figures 3 to 5 illustrate embodiments referring to example driving situations during which the first and the second camera unit 20 of the vehicle 10 may be used as additional sensors (environmental sensors, auxiliary sensors for the advanced driver assistance (ADAS) functionality). In the embodiments of Figures 3 to 5, the driving mode may be the second driving mode.

In particular, the field of view 23 of a camera unit 20 may be oriented towards a particular area of interest for use by the ADAS functionality. As illustrated in Fig. 3, the orientation 26 of the field of view 23 of the first and the second camera unit 20 may be adapted by the control unit 11 in order to extend the sensing range for capturing sensor data 17 of a sensor 12 of the vehicle 10. By way of example, the sensor 12 may be used for sensing a particular area of the environment of the vehicle 10 at a relatively far distance, wherein the first and second camera units 20 are used for sensing the particular area of the environment of the vehicle 10 at a relatively close distance.

In the embodiment of Figure 3, the control unit 11 may be configured to reconfigure the first and the second display 13 based on data 28 from an information source 19, 29 as detailed above. For example, the control unit 11 may provide a driver of the vehicle 10 with current road map data provided by a server via an internet connection 29, or with a video stored in a storage unit 19. Alternatively, or additionally also sensor data 17 from the sensor 12 may be displayed on the first and second display 13 to allow for a full reconfigurable instrument functionality of the ADAS.

Hence, when it is determined that the vehicle 10 is in the second driving mode, increased and fully reconfigurable functionality can be provided by reconfiguring the display utilized for the side mirror functionality in the first driving mode.

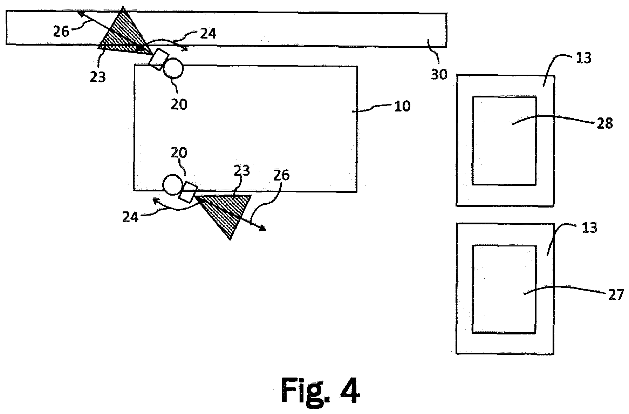

The first and second camera units 20 of a vehicle 10 may be used independently from one another to capture image data for enhancing one or more ADAS functionalities of the vehicle 10 and providing side mirror functionality. By way of example, the first camera unit 20 may be used to capture image data regarding the environment on the side or the rear of the vehicle 10, and the second camera unit 20 may be used to capture image data regarding a particular object 30 (as illustrated in Fig. 4).

Referring now to the embodiment of Figure 4, the control unit 11 of the vehicle 10 may be configured to detect an object 30 within the environment of the vehicle 10. The object 30 may be detected e.g. based on sensor data 17 provided by the one or more sensors 12. By way of example, a sidewalk may be detected on the second (e.g. the right) side of the vehicle 10. The control unit 11 may control the second camera unit 20 to adapt its field of view 23 towards the detected object 30, which may be realized by operating the respective drive unit 22. The field of view 23 of the second camera unit 20 may then be directed towards the detected sidewalk to capture image data of the object 30. The image data may be used by the control unit 11 in the context of an ADAS functionality. By doing this, the reliability and the quality of the ADAS functionality may be improved. By way of example, the image data which is provided by the second camera unit 20 may be used to provide an improved supervision of the sideway.

At the same time, the control unit 11 may be configured to adapt the field of view 23 of the first camera unit 20 (e.g. the left) to be directed to the rear of the vehicle 10. The field of view 23 of the first camera unit 20 may then be such that it corresponds to the typical field of view of a side mirror of a vehicle 10.

In the embodiment of Figure 4, only the second display 13 may be reconfigured based on the data 28 from the information source 19, 29, alternatively, or additionally, including sensor data 17 from the one or more sensors 12, while the first display 13 is adapted to display the image data 27 (first image data) captured by the first camera unit 20.

In this context, the control unit 11 may further be configured to store a correlation between the orientation 26 of a camera 21 and/or the direction and/or extension of a field of view 23 of the respective camera unit 20 and the type of display content to be displayed.

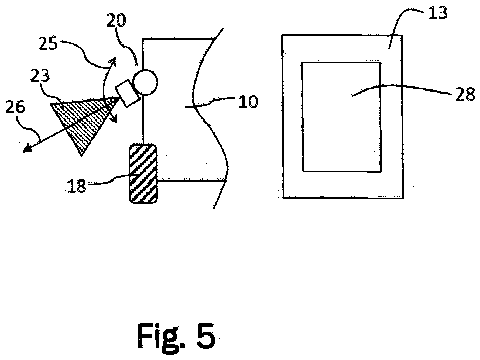

Referring to the embodiment of Figure 5, one side of a vehicle 10 (including a wheel 18 of the vehicle 10) is shown. It can be seen that the orientation 26 of the field of view 23 of the camera unit 20 may be rotated around the roll axis of the vehicle 10 by operating, for example, the drive unit, in order to change the elevation angle 25 of the orientation 26 of the field of view 23 of the camera unit 20. This may be useful during a parking maneuver, e.g. for inspecting the ground around the vehicle 10 and/or for verifying whether a wheel 18 of the vehicle 10 touches a sidewalk.

Hence, a camera unit 20 and a display 13 for a vehicle 10 are described, which provide a driving mode dependent side mirror functionality. Furthermore, a control unit is described configured to redirect the field of view 23 of the camera unit 20 depending on the interest and/or need of an ADAS system of the vehicle 10 and to reconfigure the display 13 based on data from an information source 19, 29 if no side mirror functionality is required by a driver of the vehicle 10 and to adapt the display 13 based on image data captured by the camera unit 20, if side mirror functionality is required by the driver of the vehicle 10.

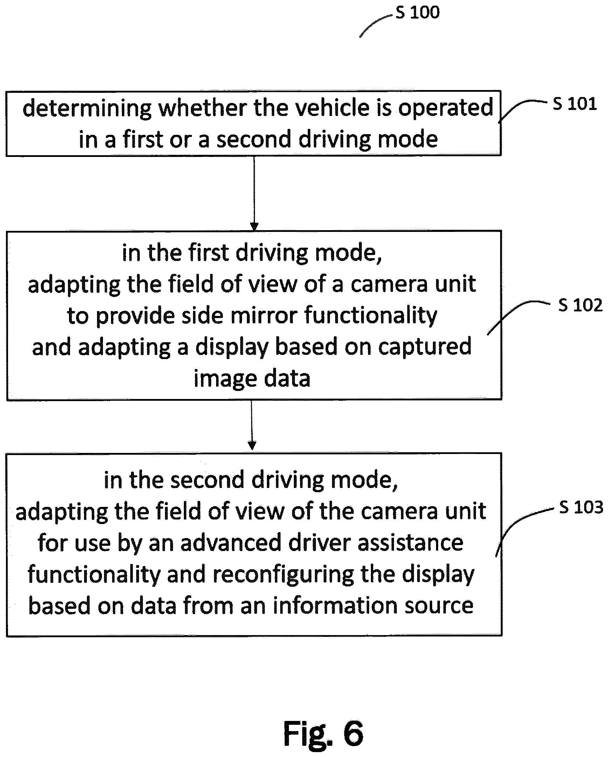

Fig. 6 shows a flow chart of an embodiment of a method S100 for providing a vehicle with a driving mode dependent side mirror functionality.

In step S101 it is determined, by the control unit, whether the vehicle is operated in a first or in a second driving mode.

Instep S102, upon determining that the vehicle is operated in the first driving mode, the field of view of a camera unit is adapted, by the control unit, to capture image data for providing a side mirror functionality and the display is adapted, by the control unit, based on the captured image data. For example, the captured image data may be rendered on the display.

In step S103, upon determining that the vehicle is operated in the second driving mode, the field of view of the camera unit is adapted, by the control unit, to capture image data for use by an advanced driver assistance functionality and the display is reconfigured based on data from an information source.

As detailed above, in an embodiment, the first driving mode may correspond to a mode in which the driver of the vehicle is required to perform a driving task or to supervise an automated guidance of the vehicle, and the second driving mode may correspond to a mode in which the driver of the vehicle may not be required to perform a driving task or to supervise an automated guidance of the vehicle; or the first driving mode may correspond to one of automation levels 0 to 3 as defined by the Society of Automotive Engineers and the second driving mode may correspond to one of automation level 4 or higher as defined by the Society of Automotive Engineers, (SAE), under J3016, which is hereby incorporated by reference including any reviews, updates or future versions as detailed above.

In an embodiment, the method S100 may then further comprise the step of receiving, via a user interface, an input from the driver of the vehicle to select a driving mode or an automation level, and method steps S101 to S103 may then be based on the received input.

In an embodiment, step S102 may comprise upon determining in step S101 that the vehicle is operated in the first driving mode, adapting S102, by the control unit, independently the field of view of a first camera unit to capture first image data and the field of view of a second camera unit to capture second image data for providing the side mirror functionality and the first display based on the first image data and the second display based on the second image data.

And step S103 may comprise upon determining in step S101 that the vehicle is operated in the second driving mode, adapting S103, by the control unit, independently the field of view of the first camera unit to capture first image data and/or the field of view of the second camera unit to capture second image data for assisting the advanced driver assistance functionality of the vehicle and reconfiguring, by the control unit, the first display and/or the second display based on the data from the information source.

The features described herein may be relevant to one or more examples of the present document in any combination. The reference numerals in the claims have merely been introduced to facilitate reading of the claims. They are by no means meant to be limiting.

Throughout this specification various examples have been discussed. However, it should be understood that the invention is not limited to any one of these. It is therefore intended that the foregoing detailed description be regarded as illustrative rather than limiting.

## Claims

1. System for providing a vehicle (10) with a driving mode dependent side mirror functionality, the system comprising:
a control unit (11) configured to determine whether the vehicle (10) is operated in a first driving mode or in a second driving mode;
a camera unit (20) coupled to the control unit (11) and configured to capture image data within an adaptable field of view (23); and
a display (13) coupled to the control unit (11),
wherein the control unit (11) is configured to:
a) adapt the field of view (23) of the camera unit (20) to capture image data for providing a side mirror functionality and the display (13) based on the captured image data (27), when it is determined that the vehicle (10) is operated in the first driving mode; and
b) adapt the field of view (23) of the camera unit (20) to capture image data for use by an advanced driver assistance functionality of the vehicle (10) and to reconfigure the display (13) based on data (28) from an information source (19, 29), when it is determined that the vehicle (10) is operated in the second driving mode.

2. System according to claim 1, wherein the camera unit (20) is provided at a side of the vehicle (10) and the display (13) is provided in the vehicle cabin within the field of view of the driver of the vehicle (10).

3. System according to claim 1 or 2, wherein the camera unit (20) comprises a camera (21) configured to capture the image data and a drive unit (22) configured to change the focal length and/or the orientation (26) of the camera (21) horizontally (24) and/or vertically (25) to adapt the field of view (23) of the camera unit (20).

4. System according to any of claims 1 to 3, wherein the first driving mode corresponds to a mode in which the driver of the vehicle (10) is required to perform a driving task (15, 16) or to supervise an automated guidance (15, 16) of the vehicle (10), and wherein the second driving mode corresponds to a mode in which the driver of the vehicle (10) is not required to perform a driving task (15, 16) or to supervise an automated guidance (15, 16) of the vehicle (10).

5. System according to any of claims 1 to 3, wherein the first driving mode includes one of automation levels 0 to 3 as defined by the Society of Automotive Engineers, (SAE), under J3016, and wherein the second driving mode includes one of automation levels 4 or higher as defined by the Society of Automotive Engineers, (SAE), under J3016.

6. System according to claim 4 or 5, wherein the vehicle (10) comprises a user interface (14) configured to receive an input from the driver of the vehicle (10) to select a driving mode or an automation level, and wherein the control unit (11) is configured to determine whether the vehicle (10) is operated in the first driving mode or in the second driving mode based on the received input.

7. System according to claim 6, wherein the control unit (11) is configured to, based on the received input, to adapt the field of view (23) of the camera unit (20), to adapt the display (13) based on the captured image data (27) and to reconfigure the display (13) based on the data (28) from the information source (19, 29).

8. System according to any of claims 1 to 7, wherein the vehicle (10) comprises one or more sensors (12) selected from the group consisting of a LIDAR sensor, a short-range RADAR sensor, a long-range RADAR sensor, a video camera, an infrared sensor and an ultrasonic sensor, and wherein the advanced driver assistance functionality is based on sensor data (17) obtained by the one or more sensors (12).

9. System according to any of claims 1 to 8, wherein the data (28) from the information source (19, 29) comprises at least one of personal information data, general information data, infotainment data or sensor data (17).

10. System according to any of claims 1 to 9, wherein the system comprises a first and a second camera unit (20), coupled to the control unit (11) and a first and a second display (13), coupled to the control unit (11), wherein the first camera unit (20) is provided at a first side of the vehicle (10) and the second camera unit (20) is provided at the side opposite to the first side of the vehicle (10) and the first display (13) and the second display (13) are provided within the vehicle cabin in the field of view of the driver of the vehicle (10), and the control unit (11) is configured to:
a) independently adapt the field of view (23) of the first camera unit (20) to capture first image data and of the second camera unit (20) to capture second image data for providing the side mirror functionality and the first display (13) based on the first image data (27) and the second display (13) based on the second image data, when it is determined that the vehicle (10) is operated in the first driving mode; and
b) independently adapt the field of view (23) of the first camera unit (20) to capture first image data and/or of the second camera unit (20) to capture second image data for assisting the advanced driver assistance functionality of the vehicle (10) and to reconfigure the first display (13) and/or the second display (13) based on the data (28) from the information source (19, 29), when it is determined that the vehicle (10) is operated in the second driving mode.

11. A vehicle (10) comprising:
a system according to any of the previous claims, wherein the vehicle (10) is configured to be operated in a first driving mode or in a second driving mode.

12. Method (S100) for providing a vehicle (10) with a driving mode dependent side mirror functionality, the method comprising the steps of:
a) determining (S101), by a control unit (11), whether the vehicle (10) is operated in a first driving mode or in a second driving mode;
b) upon determining (S101) that the vehicle (10) is operated in the first driving mode, adapting (S102), by the control unit (11), the field of view (23) of a camera unit (20) to capture image data for providing a side mirror functionality and the display (13) based on the captured image data (27);
c) upon determining (S101) that the vehicle (10) is operated in the second driving mode, adapting (S103), by the control unit (11), the field of view (23) of the camera unit (20) to capture image data for use by an advanced driver assistance functionality of the vehicle (10) and reconfiguring, by the control unit (11), the display (13) based on data (28) from an information source (19, 29).

13. Method (S100) according to claim 12, wherein the first driving mode corresponds to a mode in which the driver of the vehicle (10) is required to perform a driving task (15, 16) or to supervise an automated guidance (15, 16) of the vehicle (10), and wherein the second driving mode corresponds to a mode in which the driver of the vehicle (10) is not required to perform a driving task (15, 16) or to supervise an automated guidance (15, 16) of the vehicle (10);
or wherein the first driving mode corresponds to one of automation levels 0 to 3 as defined by the Society of Automotive Engineers, (SAE), under J3016, and wherein the second driving mode corresponds to one of automation level 4 or higher as defined by the Society of Automotive Engineers, (SAE), under J3016.

14. Method (S100) according to claim 13, wherein the method (S100) further comprises the step of receiving, via a user interface (14), an input from the driver of the vehicle (10) to select a driving mode or an automation level, and wherein method steps a) to c) (S101, S102, S103) are based on the received input.

15. Method (S100) according to any of claims 12 to 14, wherein step b) comprises upon determining (S101) that the vehicle (10) is operated in the first driving mode, adapting (S102), by the control unit (11), independently the field of view (23) of a first camera unit (20) to capture first image data and the field of view (23) of a second camera unit (20) to capture second image data for providing the side mirror functionality and the first display (13) based on the first image data (27) and the second display (13) based on the second image data (27);
and wherein step c) comprises upon determining (S101) that the vehicle (10) is operated in the second driving mode, adapting (S103), by the control unit (11), independently the field of view (23) of the first camera unit (20) to capture first image data and/or the field of view (23) of the second camera unit (20) to capture second image data for assisting the advanced driver assistance functionality of the vehicle (10) and reconfiguring, by the control unit (11), the first display (13) and/or the second display (13) based on the data (28) from the information source (19, 29).
